# EUROPÄISCHE PATENTSCHRIFT

(11) **EP 1 498 304 B1**
(45) Veröffentlichungstag und Bekanntmachung des Hinweises auf die Patenterteilung: **20.01.2010**
(21) Anmeldenummer: 03025931.1
(22) Anmeldetag: 13.11.2003
(51) Int. Cl.: B60N 2/36, B60N 2/30, B60R 13/01, B60N 2/06

(54) **Spaltabdeckung zwischen einem Laderaumboden und einer Sitzanordnung eines Fahrzeuges**
Cover for a gap between a floor of a loading compartment and a seat arrangement of a vehicle
Recouvrement pour une fente entre le sol du compartiment de chargement et l'agencement de siège

(30) Priorität: 17.07.2003 DE 10332375
(43) Veröffentlichungstag der Anmeldung: 19.01.2005
(73) Patentinhaber: Volkswagen Aktiengesellschaft, 38436 Wolfsburg (DE)
(72) Erfinder: Hayn, Hans-Joachim, 38448 Wolfsburg (DE); Katt, Claus, 38375 Räbke (DE); Scheibler, Michael, 39164 Wanzleben (DE); Kühl-Müller, Michael, 38100 Braunschweig (DE)

(56) Entgegenhaltungen:
- DE-U1- 20 009 327
- PATENT ABSTRACTS OF JAPAN Bd. 2002, Nr. 07, 3. Juli 2002 (2002-07-03) -& JP 2002 067762 A (TACHI S CO LTD), 8. März 2002 (2002-03-08)
- PATENT ABSTRACTS OF JAPAN Bd. 2002, Nr. 07, 3. Juli 2002 (2002-07-03) & JP 2002 067808 A (NISSAN MOTOR CO LTD), 8. März 2002 (2002-03-08)

## Beschreibung

Die vorliegende Erfindung bezieht sich auf eine Spaltabdeckung zwischen einer verstellbaren Sitzanordnung und zumindest einem Laderaumboden, mit wenigstens einem Abdeckelement, weiches über ein Federelement mit der Sitzanordnung gekoppelt ist.

Aus der Druckschrift DE 198 38 734 A1 ist eine hintere Sitzanordnung für ein Kraftfahrzeug bekannt. Die bekannte längsverstellbare Sitzanordnung ist vor dem Laderaumboden angeordnet, wobei zur Schließung eines im Bereich des Laderaumbodens durch Verstellung des Sitzes gebildeten Spaltes eine in der Ebene des Laderaumbodens liegende Abdeckung vorgesehen ist. Die Abdeckung besteht aus zwei Klappen, welche um eine parallel zur Rücksitzlehne verlaufende Achse schwenkbar sind.

Weitere Abdeckungen sind z.B aus der JP 2002-67762 A oder der JP 2002-67808 A bekannt.

Ferner wird durch die Druckschrift DE 100 12 590 A1 eine Sitzanordnung für ein Kraftfahrzeug offenbart. Auch diese bekannte Sitzanordnung weist eine Klappe zur Spaltabdeckung auf. Die formstabile Klappe ist an der Sitzlehne angelenkt, sodass beim Längsverstellen der Sitzanordnung der entstehende Spalt durch die sich mitbewegende Klappe abgedeckt wird.

Auch die Druckschrift DE 101 09 651 A1 offenbart eine Abdeckung für einen Spalt hinter einer Rücksitzlehne in einem Fahrzeug. Die Abdeckung ist direkt an die Rücksitzlehne angeformt und dient als Gepäckraumabdeckung.

Die Druckschrift DE 200 09 327 U1 zeigt eine Einrichtung zur Abdeckung des Spaltes zwischen einer verstellbaren Sitzanordnung und einem Laderaumboden. Die bekannte Einrichtung weist ein flächiges Abdeckelement auf, welches direkt mit dem Fahrzeugsitz verbunden ist. Das Abdeckelement ist bei einer Ausgestaltungsvariante der bekannten Einrichtung aus einem elastischen Textil- oder Kunststoffmaterial gefertigt und dient quasi selbst zum Längenausgleich des durch Längsverschieben entstehenden Spaltes. Bei einer anderen Variante ist das Abdeckelement flexibel ausgestaltet, wobei ein Längenausgleich durch eine gefaltete Anordnung des Abdeckelements erreicht wird. Eine letzte Variante zeigt ein flexibles Abdeckelement, welches über Umlenkelemente geführt wird. Dabei wird das Abdeckelement durch ein mit dem Fahrzeugsitz verbundenen Federelement vorgespannt, um Verstellbewegungen des Fahrzeugsitzes auszugleichen.

Ausgehend von diesem Stand der Technik ist es nachteilig, dass das Abdeckelement nur geringfügig durch Ladegut belastbar ist, da es flexibel ausgestaltet ist. Ferner kann das Abdeckelement nicht entnommen werden, wenn ein möglichst großer Laderaum benötigt wird. Darüber hinaus ist die bekannte Spaltabdeckung insbesondere hinsichtlich ihrer Funktionsweise und ihres Aufbaus mit Umlenkelementen oder dergleichen kompliziert ausgestaltet.

Der Erfindung liegt die Aufgabe zugrunde, eine Spaltabdeckung zwischen einer verstellbaren Sitzanordnung und zumindest einem Laderaumboden gemäß der eingangs genannten Gattung vorzuschlagen, welche möglichst einfach aufgebaut ist und die aus dem Stand der Technik bekannten Nachteile vermeidet.

Diese Aufgabe wird erfindungsgemäß durch die Merkmale des Patentanspruches 1 gelöst. Weitere Vorteile und vorteilhafte Ausgestaltungen ergeben sich aus den Unteransprüchen.

Demnach wird eine erfindungsgemäße Anordnung einer Spaltabdeckung zwischen einer verstellbaren Sitzanordnung und zumindest einem Laderaumboden, mit wenigstens einem Abdeckelement vorgeschlagen, bei der jedes Abdeckelement über zumindest einen Federhalter derart vorgespannt ist, dass eine Federkraft auf das Abdeckelement wirkt. Auf diese Weise wird zum einen das über den Federhalter mit der Sitzanordnung befestigte Abdeckelement durch Verstellbewegungen der Sitzanordnung derart mit bewegt, dass ein entstehender Spalt immer abgedeckt ist. Zum anderen wird mit der erfindungsgemäßen Spaltabdeckung sichergestellt, dass auch ein durch Neigungsverstellungen der Sitzlehne entstehender Spalt immer durch das Abdeckelement abgedeckt wird, da die auf das Abdeckelement wirkende Federkraft ein sofortiges Nachziehen des Abdeckelements bewirkt.

Folglich wird eine besonders einfach funktionierende Spaltabdeckung für den Laderaum eines Fahrzeuges realisiert. Ferner ist es bei der erfindungsgemäßen Spaltabdeckung vorteilhaft, dass sämtliche Funktionen der Sitzanordnung erhalten bleiben. Darüber hinaus wird eine stufenlose Verstellung der Spaltabdeckung ermöglicht. Die erfindungsgemäße Spaltabdeckung stellt sicher, dass keinerlei Ladegut o. ä. durch den Spalt in jeder beliebigen Anordnung der hinteren Sitzanordnung und des Laderaumbodens gelangen kann.

Im Rahmen einer vorteilhaften Ausgestaltung der vorliegenden Erfindung kann der Federhalter vorzugsweise an dem Sitzgestell der Sitzanordnung befestigt sein. Somit kann der Federhalter bei Längsverstellbewegungen der Sitzanordnung und das daran befestigte Abdeckelement derart mitbewegt werden, sodass eine Spaltabdeckung unabhängig von der Einstellung der Sitzanordnung ermöglicht wird. Es ist auch denkbar, dass der jeweilige Federhalter an anderen Positionen, z. B. mit der Sitzanordnung verbunden ist.

Besonders vorteilhaft ist es, wenn der Federhalter mit dem Abdeckelement lösbar verbunden ist. Auf diese Weise kann z. B., wenn die Spaltabdeckung nicht benötigt wird, diese bzw das Abdeckelement von dem Federhalter -gelöst werden und aus -dem Laderaum des Fahrzeuges entnommen werden. Vorzugsweise kann als lösbare Verbindung an dem Abdeckelement ein Haken oder dergleichen vorgesehen sein. Der Haken kann in eine entsprechende Öse oder dergleichen an dem Federhalter eingehakt werden. Es sind auch andere lösbare Verbindungen zwischen dem Abdeckelement und dem Federelement möglich.

Um eine ausreichende Stabilität der erfindungsgerriäßen - Spaltäbdeckung zu gewährleisten, kann vorzugsweise als Abdeckelement zumindest eine Platte oder dergleichen verwendet werden. Somit kann durch die erfindungsgemäße Spaltabdeckung der zur Verfügung stehende Laderaum des Fahrzeuges erweitert werden, in dem Ladegut auch auf die Spaltabdeckung bzw. das Abdeckelement abgelegt werden kann.

Eine mögliche Variante der vorliegenden Erfindung kann vorsehen, dass die als Abdeckelement verwendete Platte verschiebbar ausgebildet ist und in eine geeignete Aufnahme etwa parallel zu dem Laderaumboden einschiebbar und auch wieder herausziehbar ist. Folglich kann durch die Verbindung zwischen dem Federhalter und der Platte eine Spaltabdeckung bei jeder Stellung der Sitzanordnung ermöglicht werden. Beispielsweise kann die Platte in Art einer Schubladenführung oder dergleichen in die Aufnahme eingeführt und wieder herausgezogen werden. Es ist auch möglich, dass eine Jalousie oder eine vertikale Verzahnung dabei verwendet wird.

Eine weitere Ausgestaltung der vorliegenden Erfindung kann vorsehen, dass als Abdeckelement mehrere Platten oder dergleichen verwendet werden, welche vorzugsweise zueinander teleskopierbar angeordnet sind. Besonders vorteilhaft ist die Verwendung von Kugelfederelementen und entsprechenden Anschlägen zwischen den Platten als Teleskop-Führung, um somit das Ausziehen der Platten entsprechend anzusteuern. Mit den Kugelfederelementen und den entsprechenden Anschlägen kann immer eine maximale Anzahl der Platten herausgezogen werden, sodass nur ein geringer Spalt entsteht und somit eine möglichst hohe Tragfähigkeit der Teleskop-Platten realisiert wird. Ferner wird bei dieser Vorgehensweise zwischen den ausgezogenen Platten eine möglichst geringe Stufe realisiert. Gemäß einer Weiterbildung der Erfindung können als Anschläge Führungsstifte und/oder Begrenzungsstifte oder dergleichen vorgesehen sein.

Um eine möglichst einfache Lagerung der Platten vorzusehen, kann im Rahmen einer weiteren Ausgestaltung der vorliegenden Erfindung vorgesehen sein, dass die Platten zumindest teilweise von einem Gehäuse aufgenommen werden. Vorzugsweise kann das Gehäuse lösbar z. B. an der Laderaumverkleidung oder dergleichen befestigt sein. Besonders vorteilhaft ist bei dieser Ausgestaltung, dass, wenn die erfindungsgemäße Spaltabdeckung nicht benötigt wird, die Platten mit dem Gehäuse auf einfachste Weise aus dem Laderaum des Fahrzeuges entnommen werden können.

Aus Sicherheitsgründen kann die lösbare Befestigung des Gehäuses in dem Laderaum z. B. mit einer federbelasteten Crashverriegelung oder dergleichen ausgerüstet sein. Auf diese Weise kann auch im Fall eines Crashs verhindert werden, dass die Platten mit dem Gehäuse unkontrolliert durch das Fahrzeug bewegt werden.

Eine nächste Weiterbildung der vorliegenden Erfindung kann vorsehen, dass z. B. an der Sitzlehne der Sitzanordnung wenigstens ein Gleitblech oder dergleichen befestigt ist, um ein Eindrücken der Sitzlehne oder sogar Beschädigungen daran zu vermeiden. Das Gleitblech ist vorzugsweise an dem dem Federhalter zugewandten Abschnitt der Sitzlehne der Sitzanordnung befestigt. Es ist jedoch auch möglich, dass mehrere Gleitbleche an beliebigen Abschnitten der Sitzanordnung vorgesehen sind. Bevorzugt kann als Werkstoff für das Gleitblech ein abriebfester Werkstoff verwendet werden.

Der an dem Sitzgestell befestigte Federhalter ist vorzugsweise als Blattfederelement z. B. aus Federstahl ausgebildet. Es ist auch denkbar, dass andere geeignete Federelemente als Federhalter verwendet werden. Beispielsweise können auch mehrere z. B. über eine gemeinsame Achse verbundene Spiralfedern oder dergleichen verwendet werden. Bei den als Federhalter vorgesehenen Elementen ist es jedoch wichtig, dass diese neben dem Aufbringen der nötigen Federkraft auf die Sitzanordnung zur Vorspannung auch in der Lage sind, senkrecht zur Fahrzeuglängsrichtung wirkende Kräfte aufnehmen zu können. Auf diese Weise werden die Platten geeignet abgestützt, sodass die erfindungsgemäße Spaltabdeckung bezüglich aufnehmender Lasten weiter stabilisiert wird.

Bei der Verwendung einer geteilten Sitzanordnung in einem Fahrzeug, wie z. B. einer Eindrittel/Zweidrittel-Teilung kann die erfindungsgemäße Spaltabdeckung jeweils einen Federhalter für jedes Abdeckelement aufweisen, wobei die beiden benachbarten Abdeckelemente in einem Gehäuse oder in einer geeigneten Aufnahme aufgenommen sind und geführt werden. Bei einer Eindrittel/Zweidrittel-Aufteilung sind somit zwei unterschiedlich große Abdeckelemente nebeneinander vorgesehen. Es ist jedoch auch möglich, bei einer anderen beliebigen Aufteilung der Sitzanordnung auch weitere Abdeckelemente bei der erfindungsgemäßen Spaltabdeckung zu verwenden.

Im folgenden werden die Erfindung und deren Ausgestaltungen im Zusammenhang mit den Figuren näher erläutert. Es zeigen:
- Figur 1: eine geschnittene Ansicht eines ersten Ausführungsbeispiels einer erfindungsgemäßen Spaltabdeckung zwischen einer Sitzanordnung in einer normalen Sitzposition und einem Laderaumboden;
- Figur 2: eine geschnittene Ansicht der erfindungsgemäßen Spaltabdeckung gemäß Figur 1 der Sitzanordnung, in der diese ihre maximale Verstellposition nach vorne einnimmt;
- Figur 3: eine geschnittene Ansicht der erfindungsgemäßen Spaltabdeckung gemäß Figur 1 bei geklappter Sitzanordnung;
- Figur 4: eine schematische Ansicht während einer Entnahme der als Abdeckelement vorgesehenen in einem Gehäuse gelagerten und geführten Teleskop-Platten der erfindungsgemäßen Spaltabdeckung;
- Figur 5: eine geschnittene Teilansicht der in einem Gehäuse teleskopierbar aufgenommenen Platten der erfindungsgemäßen Spaltabdeckung;
- Figur 6: eine geschnittene Teilansicht des mit den Platten entnehmbaren Gehäuses, welches durch eine Crashverriegelung gesichert ist;
- Figuren 7 bis 10: schematische Ansichten eines Ausziehvorganges der erfindungsgemäßen Spaltabdeckung in verschiedenen Stellungen;
- Figur 11: eine geschnittene Teilansicht des in einem Führungsprofil der Laderaumverkleidung verschiebbar gehaltenen Gehäuses der erfindungsgemäßen Spaltabdeckung;
- Figur 12: eine dreidimensionale Ansicht eines Federhalters der erfindungsgemäßen Spaltabdeckung mit anliegenden Gleitblechen;
- Figur 13: eine dreidimensionale Ansicht der erfindungsgemäßen Spaltabdeckung für eine geteilte Sitzanordnung;
- Figur 14: eine geschnittene Ansicht eines zweiten Ausführungsbeispiels der erfindungsgemäßen Spaltabdeckung zwischen einer Sitzanordnung in einer normalen Sitzposition und einem Laderaumboden;
- Figur 15: eine geschnittene Ansicht der erfindungsgemäßen Spaltabdeckung gemäß Figur 14 in einer Cargoposition der Sitzanordnung;
- Figur 16: eine geschnittene Ansicht der erfindungsgemäßen Spaltabdeckung gemäß Figur 14 bei geklappter Sitzanordnung; und
- Figur 17: eine dreidimensionale Ansicht einer alternativen Ausgestaltung des Federhalters der erfindungsgemäßen Spaltabdeckung.

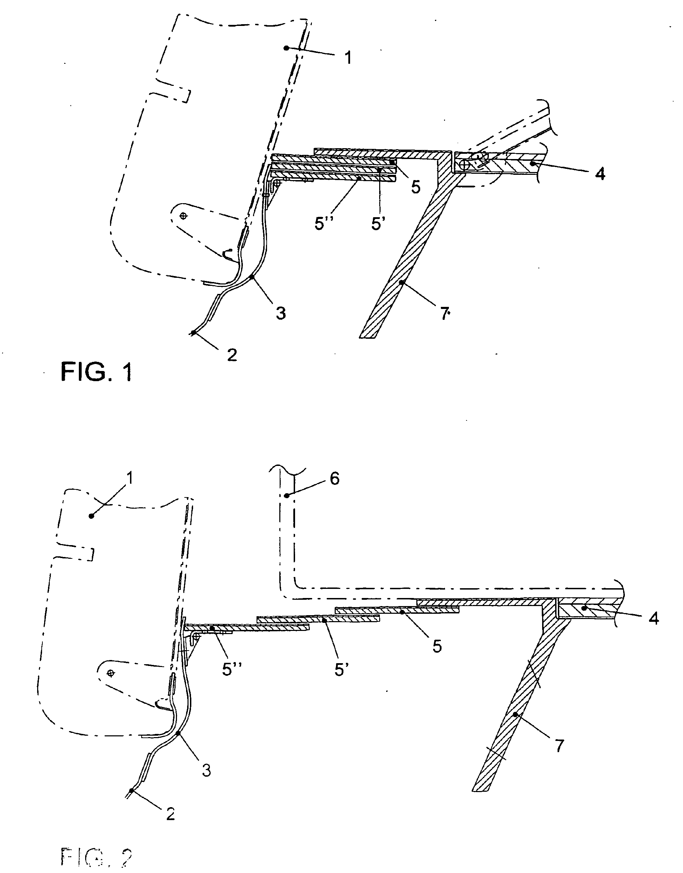

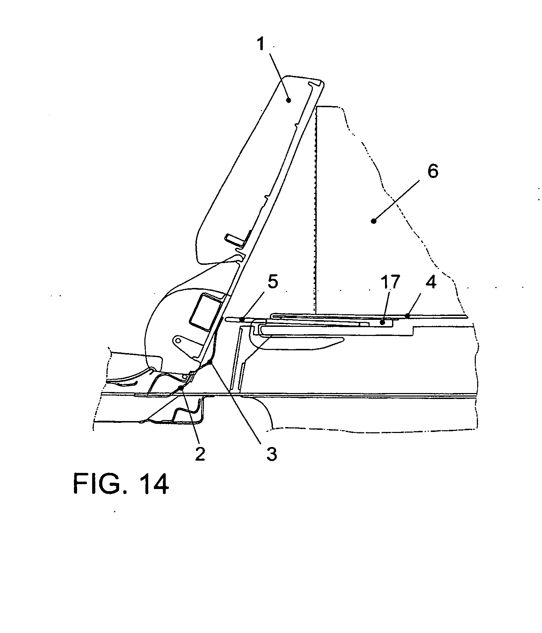

In den Figuren 1 bis 13 wird jeweils ein erstes mögliches Ausführungsbeispiel einer erfindungsgemäßen Anordnung einer Spaltabdeckung gezeigt, wobei die Figuren 14 bis 16 ein zweites mögliches Ausführungsbeispiel darstellen.

Die erfindungsgemäße Spaltabdeckung ist zwischen einer verstellbaren Sitzanordnung, welche eine Sitzlehne 1 und ein Sitzgestell 2 umfasst, und zumindest einem Laderaumboden 4 vorgesehen. Die Spaltabdeckung weist wenigstens ein Abdeckelement auf, welches über einen Federhalter 3 zum Längsverschieben mit dem Sitzgestell 2 verbunden ist. Der Federhalter 3 ist vorzugsweise als Blattfederelement ausgebildet und aus Federstahl gefertigt, wobei der Federhalter derart vorgespannt ist, dass auf das Abdeckelement eine Federkraft, insbesondere auf die Sitzlehne 1, wirkt, sodass unabhängig von der Stellung der Sitzanordnung und auch der Neigung der Sitzlehne 1 jederzeit der zwischen der Sitzanordnung und dem Laderaumboden 4 vorgesehene Spalt durch die erfindungsgemäße Spaltabdeckung abgedeckt wird. Der Laderaumboden 4 kann, wie in Figur 1 angedeutet, sowohl hochgeklappt werden, als auch entnommen werden und in eine tiefere Position gebracht werden, um somit das Ladevolumen zu vergrößern.

In Figur 1 ist eine normale Sitzposition dargestellt, wobei als Abdeckelement z. B. drei zueinander teleskopierbare Platten 5, 5', 5" vorgesehen sind. In der in Figur 1 dargestellten Position sind sämtliche Platten parallel zueinander angeordnet und zusammen herausgezogen, sodass der Spalt zwischen dem Laderaumboden 4 und der Sitzlehne 1 abgedeckt ist.

In Figur 2 ist eine Cargoposition gezeigt, in der ein teilweise dargestelltes Ladegut 6 auf dem Laderaumboden und der erfindungsgemäßen Spaltabdeckung abgelegt ist. In dieser in Figur 2 dargestellten Position sind sämtliche Platten 5, 5', 5" teleskopiert zueinander angeordnet, um den relativ großen Spalt zwischen der Sitzlehne 1 und dem Laderaumboden 4 vollständig abzudecken.

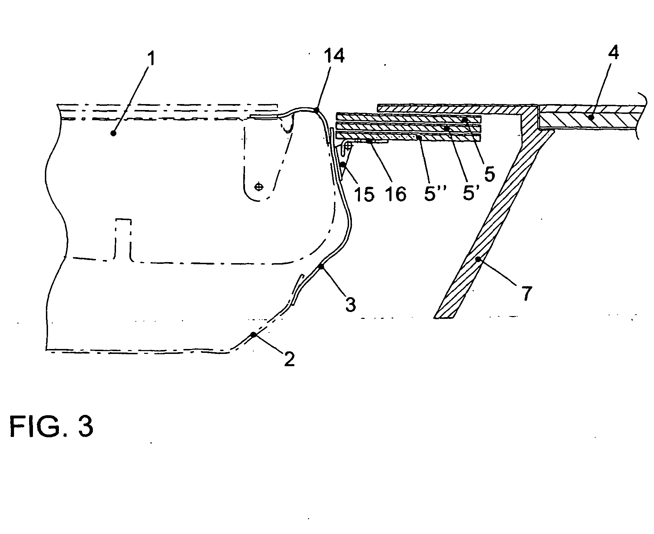

In Figur 3 ist die Sitzanordnung in einem umgeklappten Zustand gezeigt. In dieser Position werden, wie auch in Figur 1 die drei Platten 5, 5', 5" gemeinsam herausgezogen, um den entstehenden Spalt abzudecken.

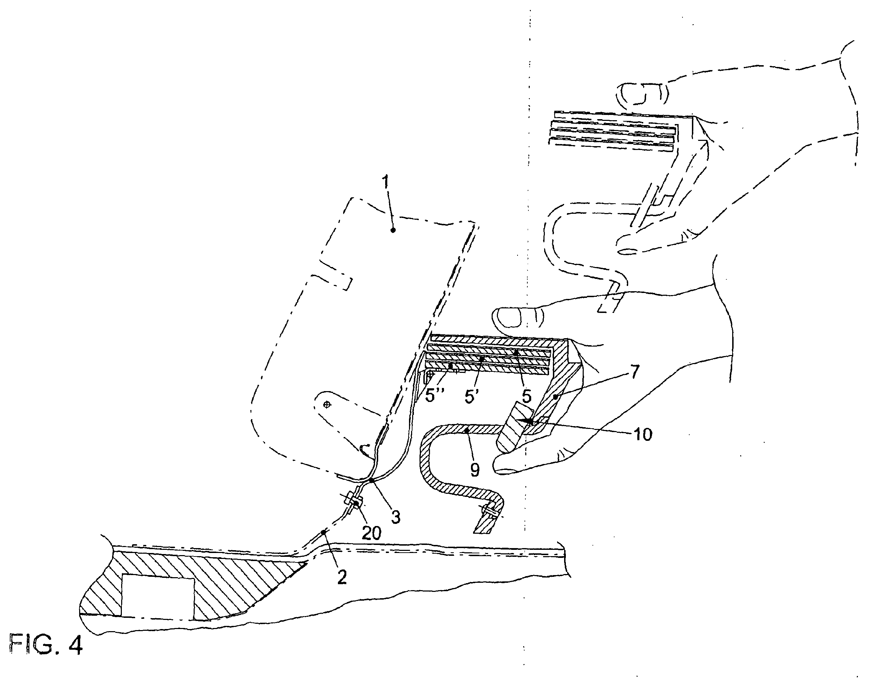

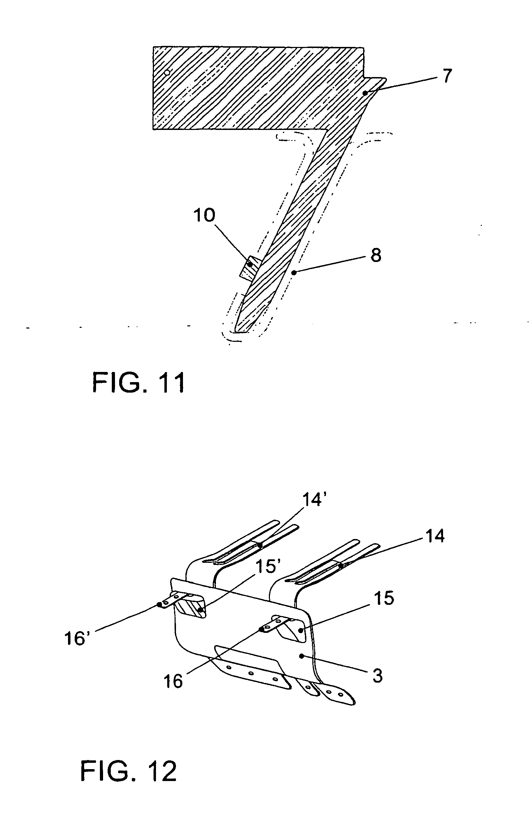

In Figur 4 wird schematisch die Entnahme der als Abdeckelement vorgesehenen Platten 5, 5', 5" dargestellt. Die Platten 5, 5', 5" werden zumindest teilweise von einem Gehäuse 7 aufgenommen, welches lösbar an einer Laderaumverkleidung befestigt ist. Eine detaillierte Darstellung ist in Figur 11 wiedergegeben, in der ein Führungsprofil 8 an der Laderaumverkleidung 11 vorgesehen ist, wobei das Gehäuse 7 verschiebbar in dem Führungsprofil 8 aufgenommen ist, sodass das Gehäuse 7 mit den Platten 5, 5', 5", wie in Figur 4 durch die gestrichelte Linie angedeutet, entnommen werden kann. Dazu kann eine Griffmulde 9 vorgesehen sein, in der sich ein Betätigungselement 10 für eine federbelastete Crashverriegelung befindet. Ferner ist in Figur 4 gezeigt, dass der Federhalter 3 an dem Sitzgestell 2 mittels zumindest einer Befestigungsschraube 20 angeschraubt ist.

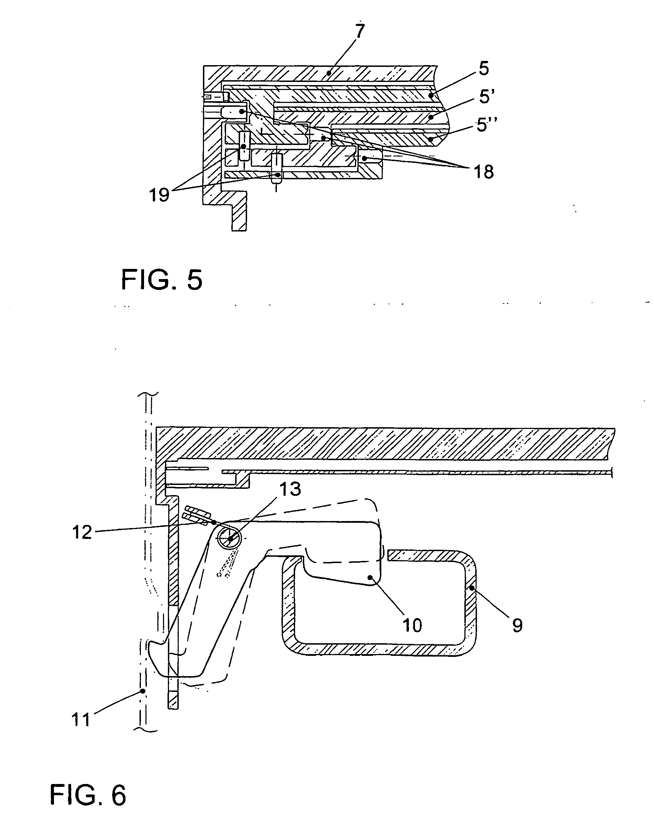

In Figur 5 ist ein geschnittener Ausschnitt der Teleskopführung zwischen den einzelnen Platten 5, 5', 5" dargestellt. Die Teleskopführung der einzelnen Platten 5, 5', 5" wird dabei über Kugelfederelemente 18 und Führungsstifte bzw. Begrenzungsstifte 19 realisiert. Durch die Führungsstifte bzw. Begrenzungsstifte 19 wird es ermöglicht, dass immer die maximale mögliche Anzahl von Platten 5, 5', 5" gemeinsam teleskopiert werden. Darüber hinaus wird ein Auseinanderfallen der Platten nach der Entnahme aus -dem Laderaum verhindert.

In Figur 6 ist die federbelastete Crashverriegelung detailliert dargestellt. Dabei ist wieder die Griffmulde 9 gezeigt, in die ein Ende des Betätigungselements 10 eingreift. Das andere Ende des Betätigungselements 10 ist in eine Ausnehmung der Laderaumverkleidung 11 eingerastet bzw. eingeklemmt. Das Betätigungselement 10 der Crashverriegelung ist mit einer Schenkelfeder 12 zur Federbelastung gekoppelt. Zum Betätigen der Crashverriegelung kann das Betätigungselement 10 um eine Achse 13 entgegen der Federkraft der Schenkelfeder 12 rotiert werden, sodass zum Herausnehmen des Gehäuses 7 die Verhakung bzw. Verrastung zwischen dem Betätigungselement 10 und der Laderaumverkleidung 11 gelöst wird.

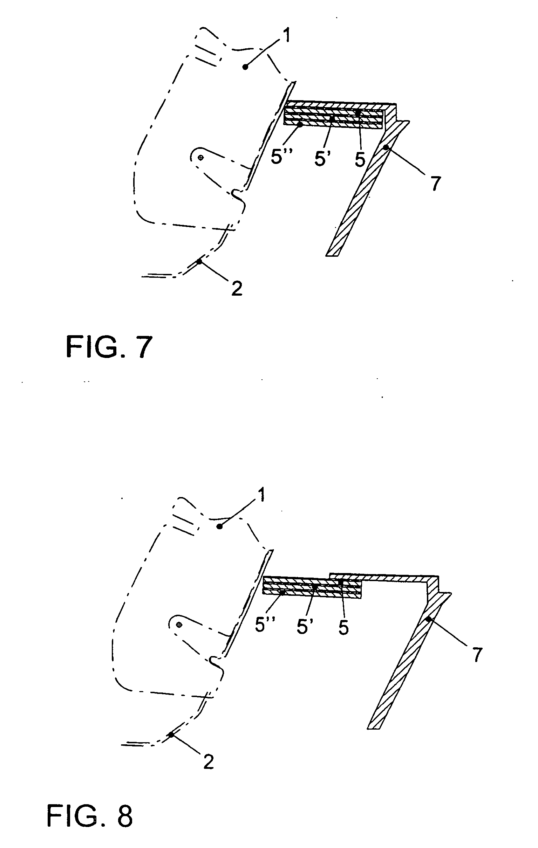

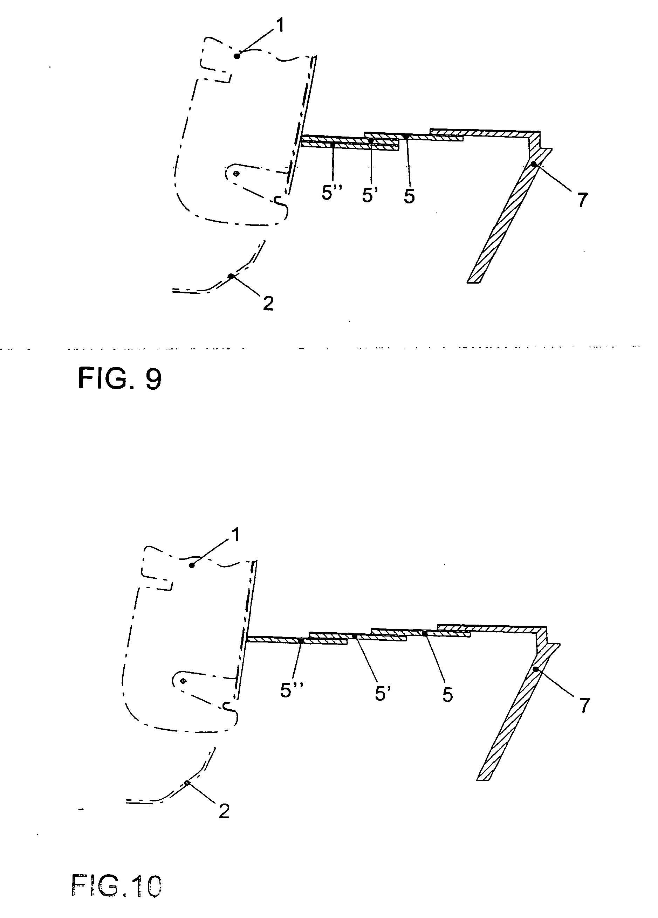

In den Figuren 7 bis 10 wird der Ausziehvorgang der erfindungsgemäßen Spaltabdeckung in vier verschiedenen Stellungen schematisch gezeigt. In Figur 7 ist die Spaltabdeckung bzw. die Platten 5, 5', 5" vollständig eingeschoben. In Figur 8 sind die Platten 5, 5', 5" gemeinsam parallel zueinander angeordnet und etwas herausgezogen. In Figur 9 ist die Platte 5 vollständig herausgezogen, während die Platten 5' und 5" parallel zueinander angeordnet sind. Schließlich ist in Figur 10 der vollständig ausgezogene Zustand der Platten 5, 5', 5" dargestellt. In den Figuren 7 bis 10 ist der erfindungsgemäße Federhalter 3, wie aus den Figuren 1 bis 3 bekannt ist, nicht dargestellt.

In Figur 11 ist der bereits erläuterte Mechanismus zum Entnehmen des Gehäuses 7 aus dem Führungsprofil 8 an der Laderaumverkleidung 11 gezeigt.

In Figur 12 ist eine mögliche Ausgestaltung des Federhalters 3 als Blattfederelement gezeigt. Das Blattfederelement ist aus Federstahl, z. B. CK70 oder dergleichen, gefertigt. An dem Federhalter 3 liegen Gleitbleche 14, 14' an, welche ebenfalls aus Stahl gefertigt sind. Die Gleitbleche 14, 14' sind an der Sitzlehne 1, wie in den Figuren 1 bis 3 gezeigt, an dem dem Federhalter 3 zugewandten Abschnitt der Sitzlehne 1 befestigt. Die Gleitbleche 14, 14' haben die Aufgabe, insbesondere die Sitzlehne vor Beschädigungen, z. B. durch den Federhalter 3 zu schützen.

Ferner ist aus Figur 12 ersichtlich, dass der Federhalter 3 Ösen 15, 15' aufweist, in die entsprechende Haken 16, 16' -eingesteckt werden können. Die Haken 16, 16' sind an der Platte 5" befestigt, beispielsweise angeschraubt. Auf diese Weise wird eine lösbare Befestigung zwischen dem Federhalter 3 und der Platte 5, 5" realisiert.

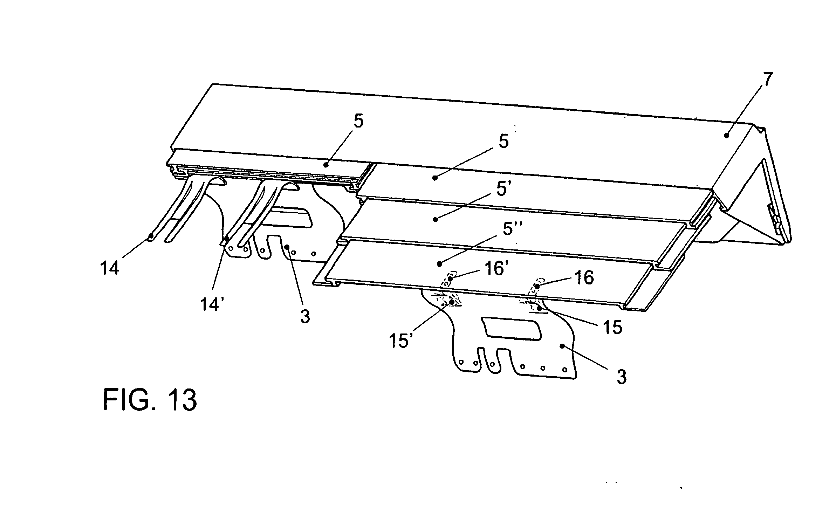

In Figur 13 ist eine dreidimensionale Darstellung der erfindungsgemäßen Spaltabdeckung bei der Verwendung einer geteilten Sitzanordnung dargestellt. Bei dieser Ausführung ist die erfindungsgemäße Spaltabdeckung quasi in zwei Systeme unterteilt. Auf diese Weise kann auch bei unterschiedlichen Stellungen der geteilten Sitzanordnung der jeweils entstehende Spalt sicher abgedeckt werden. Dies wird aus Figur 13 ersichtlich, da unterschiedliche Ausziehstellungen der beiden Systeme der erfindungsgemäßen Spaltabdeckung gezeigt sind.

In den Figuren 14 bis 16 wird jeweils ein zweites mögliches Ausführungsbeispiel gezeigt. Dabei sind gleiche Bauteile mit gleichen Bezugszeichen wie in den Figuren 1 bis 13 bezeichnet. Es ist dabei zu beachten, dass die beiden Ausführungsbeispiele auch gemeinsame Elemente, wie z. B. insbesondere den Federhalter 3, verwenden. Ferner ist es denkbar, dass die beiden Ausführungsbeispiele auch geeignet miteinander kombiniert werden können.

Das zweite Ausführungsbeispiel unterscheidet sich im wesentlichen von dem ersten Ausführungsbeispiel dadurch, dass bei der erfindungsgemäßen Spaltabdeckung lediglich ein Plattenelement 5 als Abdeckelement vorgesehen ist. Das Plattenelement 5 ist bei diesem Ausführungsbeispiel in eine Aufnahme 17 einschiebbar und zur Spaltabdeckung auch wieder herausziehbar, sodass bei einer Längsverstellung der Sitzanordnung der entstehende Spalt zwischen der Sitzlehne 1 und dem Laderaumboden 4 abgedeckt wird. Bei dieser Ausgestaltung wird als Führung eine Art geschlossener Schub verwendet. Es sind jedoch auch andere Ausführungen, wie z. B. eine Jalousieabdeckung oder vertikale Verzahnungen denkbar.

In Figur 14 ist eine normale Sitzposition der Sitzanordnung dargestellt, in der die Platte 5 nur ein wenig durch den Federhalter 3 herausgezogen ist.

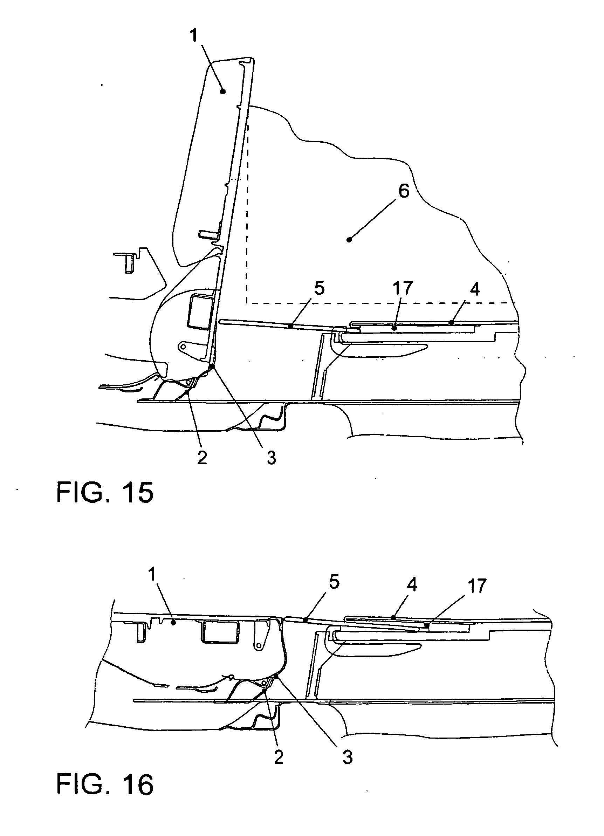

In Figur 15 ist eine Cargoposition dargestellt, bei der sich das Ladegut 6 im Laderaum befindet. Bei dieser Position ist die Platte 5 vollständig aus der Aufnahme 17 herausgezogen.

In Figur 16 ist schließlich die umgeklappte Position der Sitzanordnung dargestellt. In dieser Darstellung ist die Platte 5 etwa zur Hälfte aus der Aufnahme herausgezogen, um den Spalt zwischen der umgeklappten Sitzanordnung und dem Laderaumboden 4 zu schließen.

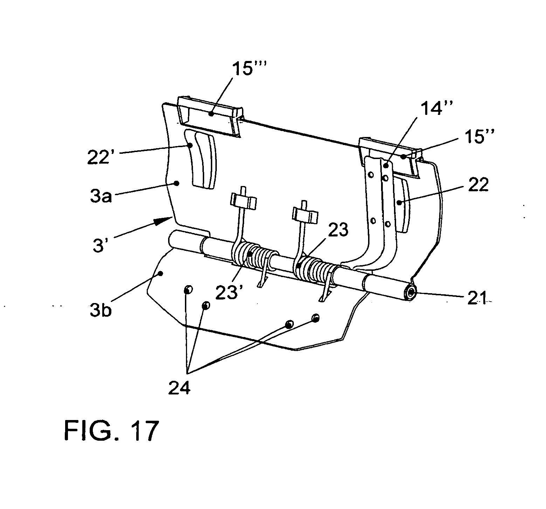

Eine alternative Ausgestaltungsmöglichkeit des Federhalters 3' ist in Figur 17 angedeutet. Der Federhalter 3' umfasst einen Halter 3b, an dem eine Schwinge 3a mittels einer Achse 21 angelenkt ist. Durch die beiden Federn 23, 23' ist die Schwinge 3a federbelastet an dem Halter 3b angeordnet. Ferner sind zwei Gleitbleche 14" an der Sitzlehne 1 der Sitzanordnung befestigt, wobei in Figur 17 lediglich ein Gleitblech 14" dargestellt ist. Die Gleitbleche 14" korrespondieren jeweils mit einem Kontaktelement 22, 22', welches jeweils an der Schwinge 3a angeordnet ist. Um den Federhalter 3' an der Platte 5" zu befestigen, sind Ösen 15", 15"' an einem der Platte 5" zugewandeten Abschnitt der Schwinge 3a vorgesehen. Der Halter 3b kann mit nicht weiter dargestellten Befestigungsschrauben 20 an dem Sitzgestell 2 befestigt werden, wobei dafür entsprechende Öffnungen 24 an dem Halter 3b vorgesehen sind.

### BEZUGSZEICHENLISTE

- 1: Sitzlehne
- 2: Sitzgestell
- 3,3': Federhalter
- 4: Laderaumboden
- 5,5',5": Platte
- 6: Ladegut
- 7: Gehäuse
- 8: Führungsprofil
- 9: Griffmulde
- 10: Betätigungselement
- 11: Laderaumverkleidung
- 12: Schenkelfeder
- 13: Achse
- 14,14',14": Gleitblech
- 15,15',15",15"': Ösen
- 16,16': Haken
- 17: Aufnahme
- 18: Kugelfederelement
- 19: Führungs- bzw. Begrenzungsstift
- 20: Befestigungsschraube
- 21: Achse
- 22,22': Kontaktelement
- 23,23': Feder
- 24: Öffnungen

## Patentansprüche

1. Anordnung mit einer verstellbaren Sitzanordnung und zumindest einem Laderaumboden und eine Spaltabdeckung zwischen der verstellbaren Sitzanordnung und dem zumindest einem Laderaumboden, mit wenigstens einem Abdeckelement, welches über ein Federelement zum Längsverschieben mit der Sitzanordnung gekoppelt ist, **dadurch gekennzeichnet, dass** als Federelement zumindest ein Federhalter (3, 3') vorgesehen ist, welcher derart vorgespannt ist, dass das Abdeckelement durch eine Federkraft auf die Sitzanordnung wirkt.

2. Anordnung nach Anspruch 1, **dadurch gekennzeichnet, dass** jeder Federhalter (3, 3') an dem Sitzgestell (2) der Sitzanordnung befestigt ist.

3. Anordnung nach Anspruch 1 oder 2, **dadurch gekennzeichnet, dass** jeder Federhalter (3, 3') mit dem Abdeckelement lösbar verbunden ist.

4. Anordnung nach Anspruch 3, **dadurch gekennzeichnet, dass** das Abdeckelement zumindest einen Haken (16, 16') aufweist, welcher in eine entsprechende Öse (15, 15', 15") an dem Federhalter (3, 3') eingehakt ist.

5. Anordnung nach einem der vorangehenden Ansprüche, **dadurch gekennzeichnet, dass** als Abdeckelement zumindest eine Platte (5, 5', 5") vorgesehen ist.

6. Anordnung nach Anspruch 5, **dadurch gekennzeichnet, dass** die Platte (5) verschiebbar ausgebildet ist und in eine Aufnahme (17) etwa parallel zu dem Laderaumboden (4) einschiebbar ist.

7. Anordnung nach Anspruch 5, **dadurch gekennzeichnet, dass** mehrere zueinander teleskopierbare Platten (5, 5', 5") vorgesehen sind.

8. Anordnung nach Anspruch 7, **dadurch gekennzeichnet, dass** die Platten (5, 5', 5") über Kugelfederelemente (18) und entsprechende Anschläge derart gekoppelt sind, dass die Platten (5, 5', 5") zunächst gemeinsam ausziehbar sind, bis jeweils eine Platte (5, 5', 5") vollständig herausgezogen ist.

9. Anordnung nach Anspruch 8, **dadurch gekennzeichnet, dass** als Anschläge Führungsstifte oder Begrenzungsstifte (19) vorgesehen sind.

10. Anordnung nach Anspruch 7 oder 8, **dadurch gekennzeichnet, dass** die Platten (5, 5', 5") zumindest teilweise von einem Gehäuse (7) aufgenommen sind.

11. Anordnung nach Anspruch 10, **dadurch gekennzeichnet, dass** das Gehäuse (7) lösbar an der Laderaumverkleidung (11) befestigt ist.

12. Anordnung nach Anspruch 10 oder 11, **dadurch gekennzeichnet, dass** zur Befestigung des Gehäuses (7) eine federbelastete Crashverriegelung vorgesehen ist.

13. Anordnung nach einem der vorangehenden Ansprüche, **dadurch gekennzeichnet, dass** zumindest ein Gleitblech (14, 14', 14") an dem dem Federhalter (3, 3') zugewandten Abschnitt der Sitzlehne (1) der Sitzanordnung befestigt ist.

14. Anordnung nach Anspruch 1, **dadurch gekennzeichnet, dass** als Federhalter (3) ein Blattfederelement vorgesehen ist.

15. Anordnung nach Anspruch 14, **dadurch gekennzeichnet, dass** als Werkstoff für das Blattfederelement Federstahl vorgesehen ist.

16. Anordnung nach einem der vorangehenden Ansprüche, **dadurch gekennzeichnet, dass** bei einer geteilten Sitzanordnung jeweils ein Federhalter (3, 3') für jedes Abdeckelement vorgesehen ist, wobei die beiden benachbarten Abdeckelemente in einem Gehäuse (7) oder einer Aufnahme (17) aufgenommen sind.

## Claims

1. Arrangement with an adjustable seat arrangement and at least one loading compartment floor and a gap cover between the adjustable seat arrangement and the at least one loading compartment floor, with at least one covering element which is coupled via a spring element to the seat arrangement for longitudinal displacement, **characterized in that** at least one spring holder (3, 3') is provided as the spring element, said spring holder being prestressed in such a manner that the covering element acts on the seat arrangement by means of a spring force.

2. Arrangement according to Claim 1, **characterized in that** each spring holder (3, 3') is fastened to the seat frame (2) of the seat arrangement.

3. Arrangement according to Claim 1 or 2, **characterized in that** each spring holder (3, 3') is connected releasably to the covering element.

4. Arrangement according to Claim 3, **characterized in that** the covering element has at least one hook (16, 16') which is hooked into a corresponding eye (15, 15', 15'') on the spring holder (3, 3').

5. Arrangement according to one of the preceding claims, **characterized in that** at least one plate (5, 5', 5'') is provided as the covering element.

6. Arrangement according to Claim 5, **characterized in that** the plate (5) is of displaceable design and can be pushed approximately parallel to the loading compartment floor (4) into a receptacle (17).

7. Arrangement according to Claim 5, **characterized in that** a plurality of mutually telescopic plates (5, 5', 5'') are provided.

8. Arrangement according to Claim 7, **characterized in that** the plates (5, 5', 5'') are coupled via spherical spring elements (18) and corresponding stops in such a manner that the plates (5, 5', 5'') can first of all be jointly pulled out until in each case one plate (5, 5', 5'') has been completely pulled out.

9. Arrangement according to Claim 8, **characterized in that** guide pins or limiting pins (19) are provided as the stops.

10. Arrangement according to Claim 7 or 8, **characterized in that** the plates (5, 5', 5'') are at least partially accommodated by a housing (7).

11. Arrangement according to Claim 10, **characterized in that** the housing (7) is fastened releasably to the loading compartment covering (11).

12. Arrangement according to Claim 10 or 11, **characterized in that** a spring-loaded crash lock is provided in order to fasten the housing (7).

13. Arrangement according to one of the preceding claims, **characterized in that** at least one sliding plate (14, 14', 14'') is fastened to that portion of the seat back (1) of the seat arrangement which faces the spring holder (3, 3').

14. Arrangement according to Claim 1, **characterized in that** a leaf spring element is provided as the spring holder (3).

15. Arrangement according to Claim 14, **characterized in that** spring steel is provided as the material for the leaf spring element.

16. Arrangement according to one of the preceding claims, **characterized in that,** in the case of a divided seat arrangement, a respective spring holder (3, 3') is provided for each covering element, the two adjacent covering elements being accommodated in a housing (7) or a receptacle (17).

## Revendications

1. Agencement doté d'un agencement de siège réglable et d'au moins un plancher de compartiment de chargement et d'un recouvrement de fente prévu entre l'agencement de siège réglable et l'au moins un plancher du compartiment de chargement, avec au moins un élément de recouvrement couplé à l'agencement de siège via un élément de ressort pour son déplacement longitudinal, **caractérisé en ce qu'**au moins un porte-ressort (3, 3') est prévu pour servir d'élément de ressort, ledit porte-ressort étant précontraint de telle sorte que l'élément de recouvrement agit sur l'agencement de siège par le biais d'une force élastique.

2. Agencement selon la revendication 1, **caractérisé en ce que** chaque porte-ressort (3, 3') est fixé au cadre de siège (2) de l'agencement de siège.

3. Agencement selon la revendication 1 ou 2,
**caractérisé en ce que** chaque porte-ressort (3, 3') est relié de façon amovible à l'élément de recouvrement.

4. Agencement selon la revendication 3, **caractérisé en ce que** l'élément de recouvrement comporte au moins un crochet (16, 16') s'accrochant dans une oeillet (15, 15', 15") associé au niveau du porte-ressort (3, 3').

5. Agencement selon l'une quelconque des revendications précédentes, **caractérisé en ce que** l'élément de recouvrement prend la forme d'au moins une plaque (5, 5', 5").

6. Agencement selon la revendication 5, **caractérisé en ce que** la plaque (5) est réalisée de façon coulissante et peut être amenée de façon coulissante dans un logement (17), approximativement parallèlement au plancher du compartiment de chargement (4).

7. Agencement selon la revendication 5, **caractérisé en ce que** plusieurs plaques (5, 5', 5") disposées de façon télescopique les unes par rapport aux autres sont prévues.

8. Agencement selon la revendication 7, **caractérisé en ce que** les plaques (5, 5', 5") sont couplées de telle sorte via des éléments de ressort sphériques (18) et les butées correspondantes que les plaques (5, 5' 5") ne peuvent être retirées ensemble que jusqu'à ce qu'une plaque (5, 5', 5") soit respectivement entièrement retirée.

9. Agencement selon la revendication 8, **caractérisé en ce que** les tiges de guidage ou de délimitation (19) prennent la forme de butées.

10. Agencement selon la revendication 7 ou 8, **caractérisé en ce que** les plaques (5, 5', 5") sont au moins logées en partie dans un boîtier (7).

11. Agencement selon la revendication 10, **caractérisé en ce que** le boîtier (7) est fixé de façon amovible au revêtement du compartiment de chargement (11).

12. Agencement selon la revendication. 10 ou 11, **caractérisé en ce qu'**un verrouillage chargé par ressort en cas de choc est prévu pour fixer le boîtier (7).

13. Agencement selon l'une quelconque des revendications précédentes, **caractérisé en ce qu'**au moins une tôle de glissement (14, 14', 14") est fixée au niveau du segment de dossier (1) de l'agencement de siège orienté vers le porte-ressort (3, 3').

14. Agencement selon la revendication 1, **caractérisé en ce que** le porte-ressort (3) prend la forme d'un élément de ressort à lame.

15. Agencement selon la revendication 14, **caractérisé en ce que** la matière prévue pour l'élément de ressort à lame est de l'acier à ressort.

16. Agencement selon l'une quelconque des revendications précédentes, **caractérisé en ce que** pour un agencement de siège divisé, un porte-ressort (3, 3') est respectivement prévu pour chaque élément de recouvrement, les deux éléments de recouvrement connexes étant logés dans un boîtier (7) ou dans un logement (17).
